# FASCICULE DE BREVET EUROPEEN

(11) **EP 2 297 744 B1**
(45) Date de publication et mention de la délivrance du brevet: **03.04.2013**
(21) Numéro de dépôt: 09753911.8
(22) Date de dépôt: 27.05.2009
(51) Int. Cl.: G21F 5/12, B65F 1/16, F16J 13/12

(54) **CONTENEUR DE CONDITIONNEMENT DE DÉCHETS NUCLÉAIRES A COUVERCLE EMMANCHE A FORCE**
BEHÄLTER ZUM EINSCHLIESSEN VON NUKLEAREN ABFALLSTOFFEN MIT AUFGEPRESSTEM DECKELTEIL
CONTAINER FOR PACKAGING NUCLEAR WASTE WITH FORCE-FITTED LID

(30) Priorité: 27.05.2008 FR 0802870
(43) Date de publication de la demande: 23.03.2011
(73) Titulaire: Areva NC, 75009 Paris (FR)
(72) Inventeur: CONVERT, Bruno, F-44100 Nantes (FR); FAVRE, Thierry, F-44300 Nantes (FR); HERICOURT, Jean, F-78180 Montigny Le Bretonneux (FR); DENIAU, Arnauld, F-50340 Les Pieux (FR); PIERRE, Pascal, F-50120 Equeurdreville (FR); AMEKRAZ, Badia, F-91190 Villiers Le Bacle (FR)
(74) Mandataire: Ilgart, Jean-Christophe
(86) Numéro de dépôt international: PCT/EP2009/056481
(87) Numéro de publication internationale: WO 2009/144256

(56) Documents cités:
- EP-A- 0 061 400
- EP-A- 0 101 362
- FR-A- 2 074 745
- US-A- 2 948 959
- US-A- 3 450 298
- US-A- 4 245 754
- US-A- 4 708 258
- US-A- 5 180 076

## Description

L'invention concerne un conteneur de conditionnement pour entreposage ou stockage ainsi qu'un procédé de confinement de produits dans un tel conteneur à couvercle emmanché à force.

On s'intéresse ici à un conteneur convenant particulièrement à l'entreposage de déchets dangereux, temporairement ou pendant une très longue durée. L'invention sera plus particulièrement décrite dans le contexte de déchets nucléaires solides où elle a été développée d'abord, mais elle n'est pas limitée à ce domaine, la nature des déchets ou d'autres produits contenus n'étant normalement pas critique. On peut envisager d'utiliser l'invention avec un intérêt marqué pour les produits dangereux, radioactifs quelconques, explosifs, toxiques, etc.

L'industrie nucléaire connaît deux procédés principaux d'entreposage des déchets. Dans le premier, des déchets sont mis dans des fûts métalliques, éventuellement comprimés, puis versés dans un conteneur métallique cylindrique avec une matrice à base de ciment qui assure le confinement radiologique. L'étanchéité du conteneur est garantie en posant un couvercle muni d'un joint d'étanchéité sur son ouverture, puis ce couvercle est boulonné. Dans le second procédé, les déchets, encore conditionnés dans des fûts, sont disposés dans des conteneurs cylindriques en béton-fibres puis du béton-fibres liquide est injecté dans le conteneur pour bloquer les fûts sans utilisation d'un couvercle. Un plateau métallique évite la remontée des déchets lors de l'injection.

L'industrie nucléaire connaît aussi des conteneurs dont les couvercles sont retenus soit a un frettage de portées lisses (EP-A-0 061 400), soit par une imbrication de formes en relief (EP-A-0 101 362). L'assemblage est réalisé par un emmanchement à chaud, sans contact. Ces procédés d'assemblage conviennent mal à des situations où il faut réaliser une compression du contenu en plus d'une obturation sûre. Ils imposent aussi un matériel plus abondant pour chauffer ou refroidir une des pièces.

On cherche à diminuer le volume nécessaire à l'entreposage et au stockage de ces déchets. Leur compression préliminaire produit un compactage favorable à ce résultat, mais il apparaît l'inconvénient que des déchets comprimés tendent à se dilater de nouveau et exercent des contraintes qui peuvent être importantes dans les conteneurs et la matrice. Cela est aggravé par les dégagements gazeux produits par radiolyse, qui exercent une surpression dans le conteneur. Certains de ces gaz sont aussi corrosifs et susceptibles de produire des dégâts affectant la sécurité de l'entreposage à long terme. Il est donc difficile de tirer le meilleur parti des possibilités offertes par la compression et la compaction, et des volumes vides notables doivent être prévus dans les conteneurs pour réduire leur contrainte interne.

L'invention concerne un conteneur de conditionnement perfectionné qui a la faculté de résister à des efforts importants de dilatation des produits contenus, consécutifs à leur compression, tout en permettant un procédé de conditionnement facile. Ce conteneur peut aussi résoudre favorablement les difficultés liées aux dégagements gazeux.

Sous une forme générale, l'invention concerne un conteneur en forme de fût pour la stabilisation et le confinement de produits tels que des déchets radioactifs, lequel conteneur se composant d'une paroi latérale ayant des bordures d'extrémité inférieure et supérieure chacune pourvues d'un élément d'obturation , l'un au moins desdits deux éléments d'obturation étant de type rapporté pour fermer une ouverture délimitée par la bordure d'extrémité associée, ledit élément d'obturation rapporté comportant deux faces, l'une intérieure et l'autre extérieure , reliées par un contour périphérique,
lequel contour périphérique de l'élément d'obturation rapporté et un contour intérieur de la bordure d'extrémité associée de la paroi latérale étant de formes générales complémentaires sur au moins une partie de leurs hauteurs respectives, de sorte que ledit élément d'obturation rapporté vienne se loger sur au moins une partie de sa hauteur dans un espace entouré par ladite bordure d'extrémité de la paroi latérale de la paroi latérale et vienne s'appuyer sur ladite bordure d'extrémité, caractérisé en ce que contour périphérique de l'élément d'obturation rapporté est pourvu d'au moins un ergot saillant et s'étendant sur sa circonférence, qui présente une section de forme générale triangulaire formée d'une surface inclinée orientée vers la face intérieure avec une inclinaison telle que ladite surface inclinée s'éloigne d'un axe central dudit élément d'obturation (6) dans un sens de la face intérieure vers la face extérieure selon un angle compris entre 20° et 40° par rapport audit axe , suivie d'une surface formant méplat , orientée vers la face extérieure ,
et en ce que le contour intérieur de la bordure d'extrémité de la paroi latérale présente au moins un logement s'étendant également sur sa circonférence, apte à recevoir ledit ergot pour assurer un verrouillage dudit élément d'obturation rapporté sur ladite paroi latérale , lequel logement présente une section comportant une surface inclinée , orientée vers l'extérieur du conteneur avec une inclinaison telle que ladite surface inclinée s'éloigne d'un axe central de ladite paroi latérale dans un sens intérieur vers extérieur selon un angle compris entre 20° et 40° par rapport audit axe, suivie d'une surface formant épaulement, orientée vers l'intérieur du conteneur.

On réalise donc une fermeture par imbrication de formes entre la partie principale du conteneur et son élément d'obturation (couvercle).

L'aspect essentiel de l'invention est dans le profil particulier des ergots et des logements s'imbriquant, qui permet à la fois de résister à des pressions internes considérables quand le conteneur est fermé tout en permettant une insertion facile, c'est-à-dire avec une force correspondant à une pression beaucoup plus faible, du couvercle dans l'orifice de la paroi latérale du conteneur. Il devient alors possible, et sans aucune difficulté, de réaliser à la fois la fermeture du couvercle et la compression des déchets par une seule opération de pressage. On peut par exemple, dans une application réellement envisagée, employer un effort de pressage de 180 tonnes, dont 150 tonnes pour comprimer les déchets et 30 tonnes pour assurer la fermeture du couvercle ; une fois fermé, le conteneur de cet exemple peut résister à un effort d'arrachement du couvercle correspondant à 300 tonnes qui correspond à un doublement de la pression interne initiale des déchets. La grande différence entre les efforts nécessaires pour fermer le conteneur par emboîtement des formes et pour l'ouvrir par arrachement du couvercle permet donc de comprimer fortement les déchets tout en jouissant d'une sécurité importante.

On est redevable de cet avantage au profil particulier des ergots et des logements s'imbriquant les uns dans les autres, et plus particulièrement à leur conicité (l'angle compris entre 20° et 40°) élevée. Cette forte conicité conduit à des larges surfaces de butée (les méplats et les épaulements) entre la paroi latérale et le couvercle, qui s'oppose à l'arrachement de celui-ci, tout en conservant une faculté de déformation élastique qui leur permet de céder sans efforts excessifs au moment de l'enfoncement du couvercle. Il est à noter que le brevet EP A 0 101 362, apparemment le plus roche de l'invention, décrit des conicités de 1° à 2° qui ne semblent pas avoir les mêmes propriétés. Il faut aussi souligner que la liaison entre le couvercle et la partie principale du conteneur est prévue par un emmanchement à chaud dans ce brevet antérieur, c'est-à-dire en dilatant la paroi latérale (ou, de façon équivalente, en refroidissant le couvercle) de manière à permettre une insertion du couvercle sans aucun contact solide. Aucun effort n'étant exercé, ce procédé n'est à première vue pas compatible avec la création d'un effort pour comprimer des déchets. Quoiqu'il soit précisé que le conteneur possède une résistance suffisante à l'arrachement, il n'est pas certain qu'elle soit équivalente à celle du conteneur de l'invention, ni qu'une fermeture par emmanchement à force soit possible.

Les emmanchements à force peuvent être accomplis facilement avec une machine simple dans une boîte à gant. Ils garantissent une grande résistance à l'arrachement. La section des conteneurs est quelconque mais elle est analogue à celle des fûts de déchets qui y sont comprimés.

La seule fonction que le conteneur doit accomplir est donc la résistance aux contraintes mécaniques. Il n'est pas nécessaire qu'il soit étanche, d'autant moins que des dégagements gazeux excessifs augmenteraient les risques d'arrachement, malgré les remarques précédentes. On décrira ensuite comment les conséquences de dégagements gazeux hors du conteneur peuvent être avantageusement combattues. Le conteneur peut toutefois absorber les dégagements corrosifs, notamment chlorés, s'il est construit en acier simple (acier noir), puisqu'il subit la corrosion : il retient donc ces produits dangereux au prix d'une diminution minime de sa résistance.

Les logements et les ergots sont avantageusement délimités par deux surfaces fortement dissymétriques, où la surface formant méplat de l'ergot saillant de l'obturation rapporté s'étend dans un plan perpendiculaire à l'axe dudit élément d'obturation et la surface formant épaulement du logement complémentaire de la bordure d'extrémité de la paroi latérale s'étend dans un plan perpendiculaire à l'axe de la paroi latérale : la butée s'opposant à l'arrachement du couvercle et particulièrement efficace alors.

Dans un mode de réalisation préféré de l'invention, le conteneur comprend cependant une pluralité desdits ergots et une pluralité desdits logements, les ergots et les logements étant superposés en direction de l'axe de l'élément d'obturation ou de l'axe de la paroi latérale. Cette disposition permet d'augmenter la résistance à l'arrachement sans augmenter excessivement la résistance à l'emmanchement, d'une part grâce à la multiplication des surfaces de butée, d'autre part grâce au maintien des reliefs à des dimensions petites, qui peuvent être déformés sans exercer d'efforts excessifs.

La facilité d'emmanchement est encore accrue si les contours complémentaires de l'élément d'obturation rapporté et de la paroi latérale sont de formes générales tronconiques complémentaires sur au moins une partie de leurs hauteurs respectives, ladite partie tronconique de l'élément d'obturation divergeant dans le sens face intérieure vers face extérieure et ladite partie tronconique de la paroi latérale divergeant dans le sens intérieur vers extérieur du conteneur, les ergots ayant des arêtes périphériques à des rayons différentes croissants de la face intérieure vers la face extérieure, et les logements sont séparés par des contours intérieures également de rayons différents, croissants de l'intérieur vers l'extérieur du conteneur ; et plus encore si les rayons de certains des contours intérieurs ont plus grands que les rayons de certaines des arêtes des ergots ; les rayons des contours intérieurs et ceux des arrêtes périphériques peuvent être successivement croissant à raison de 20% à 50% des largeurs des méplats et des épaulements. Cette disposition permet d'obtenir une association progressive des ergots et des logements, en réalisant des profondeurs d'imbrication de plus en plus grandes les uns dans les autres, ce qui permet d'appliquer progressivement la force d'emmanchement, de mieux guider le couvercle dont l'ouverture de la paroi principale et de réduire les risques de coincement prématuré du couvercle.

L'emmanchement est aussi rendu plus facile si les ergots sont attenants les uns aux autres et aussi si les contours intérieurs séparant les logements dans la paroi principale sont étroits, puisque les reliefs sont alors moins massifs et peuvent se déformer plus facilement à l'emmanchement.

Une autre mesure apte à favoriser l'emmanchement consiste à fabriquer la surface inclinée de l'ergot avec une dureté plus grande que la surface du logement, pour lui permettre de glisser plus facilement avec une déformation moindre.

L'invention concerne également un procédé pour la stabilisation et le confinement de produits tels que des déchets radioactifs solides (en particulier sous la forme d'une superposition de galettes comprimées), dans un conteneur tel que défini ci-dessus. Ce procédé particulier consiste:
- à remplir le conteneur par son ouverture de remplissage, avec lesdits déchets radioactifs solides,
- à rapporter un élément d'obturation adapté en regard de ladite ouverture de remplissage,
- à appliquer un effort de compression sur lesdits produits en exerçant une force sur ledit élément d'obturation rapporté, concentriquement à la paroi latérale et en direction de son autre élément d'obturation, jusqu'à ce que les contours complémentaires dudit élément d'obturation rapporté et de la paroi latérale s'appuient l'un contre l'autre, de manière à comprimer lesdits produits et à assurer le verrouillage passif dudit élément d'obturation rapporté sur ladite paroi latérale par l'emboîtement de leurs moyens de liaison.

Ainsi, ce procédé assure une compression des produits contenus d'une façon commode, simultanément à la fermeture du couvercle en exerçant un effort de compression important. Les conteneurs sont suffisamment dimensionnés pour reprendre des compressions importantes sans craindre les conséquences des dilatations des produits contenus.

La force est appliquée sur l'élément d'obturation rapporté de sorte à assurer la coopération du ou des ergots et du ou des logements, par emboîtement à force, la bordure d'extrémité de la paroi latérale étant déformée lors du positionnement dudit élément d'obturation.

Selon encore une caractéristique complémentaire, préalablement à son positionnement, l'élément d'obturation rapporté présente une forme générale de calotte sphérique, son bombé étant orienté du côté de sa face intérieure; une fois rapporté, cet élément d'obturation subit alors un phénomène de redressement et de déformation vers une forme, plane, sous l'effort de poussée exercé par les produits stockés, provoquant un accroissement du diamètre de son contour périphérique et optimisant la coopération ergot(s)-logement.

Ainsi qu'on l'a mentionné, on peut profiter de la circonstance qu'une étanchéité imparfaite existe entre le couvercle et la paroi latérale pour autoriser le dégazage du conteneur. On peut cependant préférer de mieux maîtriser ce dégazage, en étanchant l'élément d'obturation à la paroi latérale, l'élément d'obturation étant alors traversé par une pastille respirante perméable aux gaz; le dégazage se fait alors par cette pastille aux caractéristiques connues.

On prévoit de placer ensuite le conteneur, ou un groupe de ces conteneurs, à l'intérieur d'un conteneur externe pour renforcer le confinement radiologique. Le conteneur externe n'est pas soumis aux efforts exercés par les déchets ; c'est le conteneur interne, qui subit les efforts d'expansion des déchets sans risque de se déformer. Le conteneur externe est dimensionné pour résister aux contraintes de gerbage et de chute de charge. Les conteneurs internes sont placés avec un jeu faible dans le conteneur externe, ce qui maintient l'avantage du faible encombrement de ce mode d'entreposage. Pour éviter les surpressions liées à l'éventuel dégagement gazeux, le conteneur externe doit être perméable aux gaz.

L'invention sera encore illustrée, sans être aucunement limitée, par la description suivante de formes de réalisation possibles, données uniquement à titre d'exemples, et représentées sur les dessins annexés dans lesquels :
- la figure 1 représente une section verticale d'un conteneur conforme à l'invention, dans laquelle son ouverture supérieure est fermée par un élément d'obturation rapporté, formant couvercle;
- la figure 2 est une vue d'un détail du conteneur de la figure 1, montrant de manière agrandie et en coupe la forme de la bordure d'extrémité supérieure libre de sa paroi latérale;
- la figure 3 montre, de manière agrandie, un autre détail du conteneur de la figure 1, à savoir une section du contour périphérique de son élément d'obturation rapporté;

- la figure 4 représente les principales étapes d'une cinématique possible pour le positionnement du couvercle d'obturation, sur l'ouverture supérieure et pour le remplissage du conteneur;
- la figure 5 montre, au moyen d'une section agrandie et en détail, une variante de la structure des moyens de liaison entre l'élément d'obturation et la bordure d'extrémité supérieure de la paroi latérale ;
- la figure 6 illustre le dispositif perméable aux gaz ;
- et la figure 7 illustre l'utilisation d'un conteneur externe.

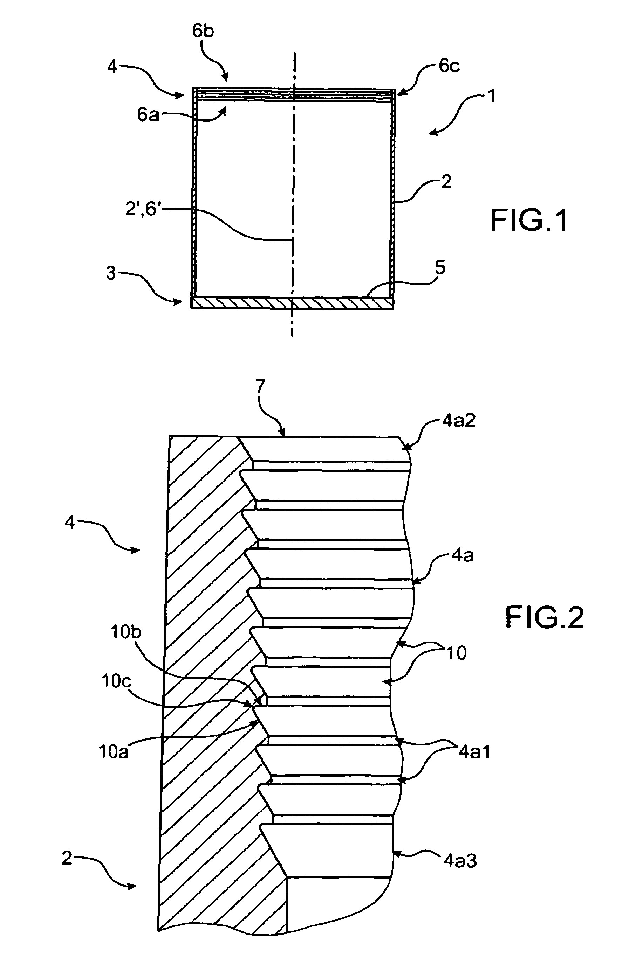

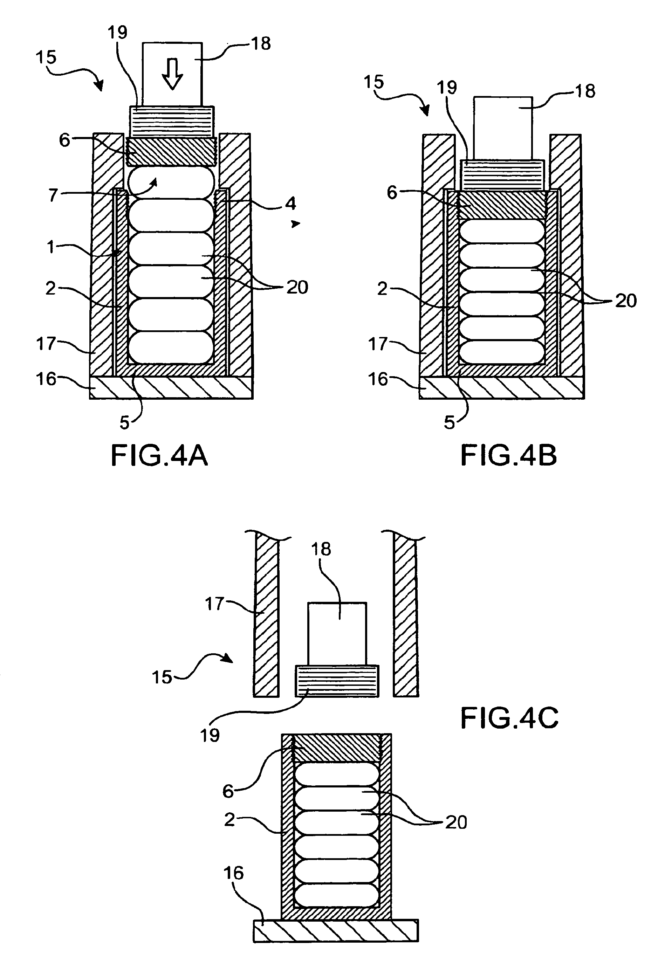

Le conteneur 1, représenté sur la figure 1, est adapté en particulier à des déchets qui ont tendance à prendre ou reprendre du volume au cours du temps. Ce conteneur 1 est ainsi dédié tout particulièrement au conditionnement d'une superposition de galettes de déchets radioactifs comprimés. Comme représenté sur cette figure 1, le conteneur 1 se présente sous la forme générale d'un fût cylindrique. Il se compose d'une paroi latérale cylindrique 2 dont les deux bordures d'extrémités, inférieure 3 et supérieure 4, sont chacune pourvues d'un élément d'obturation circulaire 5 et 6, l'un inférieur formant élément de fond et l'autre supérieur formant couvercle. En l'occurrence, l'élément de fond 5 est fixé de manière inamovible à la paroi latérale 2, par exemple par soudage ou par sertissage. L'élément de couvercle 6 est quant à lui du type rapporté. Il comporte deux faces: l'une intérieure 6a et l'autre extérieure 6b, reliées par un contour périphérique 6c. Ce couvercle 6 vient obturer l'ouverture supérieure 7 du conteneur 1 (visible aux figures 2 ou 4), qui est délimitée par la bordure supérieure 4 de la paroi latérale 2 ; comme développé par la suite, le remplissage du conteneur 2 avec les déchets à conditionner et entreposer s'effectue au travers de cette ouverture supérieure 7, avant la mise en place de ce couvercle 6. Les différentes parties du conteneur 1 sont réalisées en un matériau métallique, par exemple en acier, mais elles pourraient alternativement être réalisées en tout autre matériau choisi en fonction des contraintes environnementales ou d'exploitation. Les dimensions et épaisseurs de ces parties du conteneur 1 peuvent être adaptées à façon par l'homme du métier.

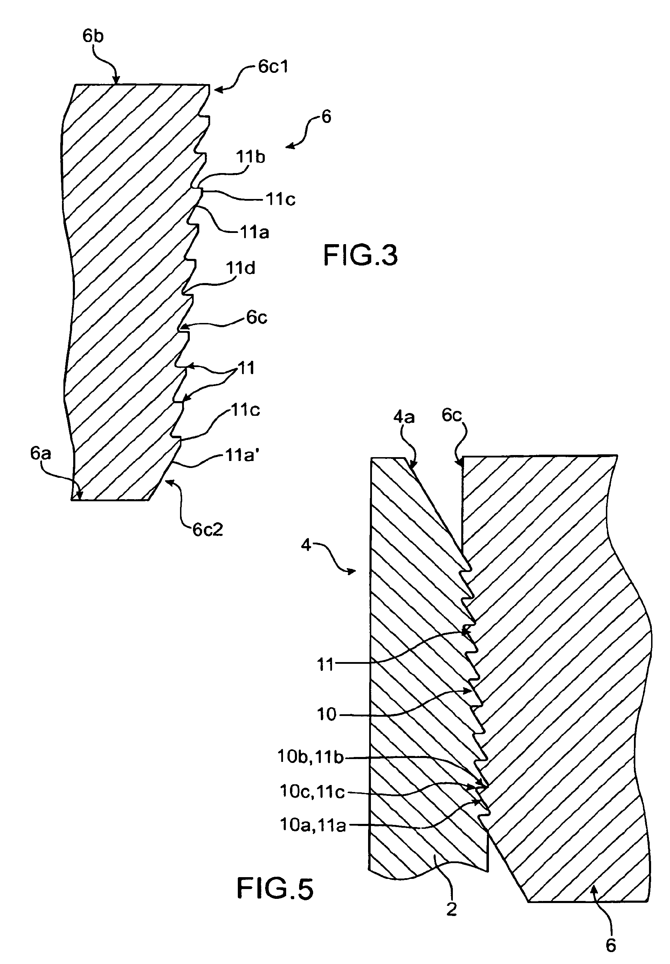

Des moyens structurels de liaison particuliers sont ici prévus entre le couvercle rapporté 6 et la bordure supérieure 4 de la paroi latérale 2. Ces moyens de liaison sont particulièrement adaptés au conditionnement de déchets radioactifs. Ils permettent en effet une fermeture de l'ouverture 7 du conteneur 1 avec le couvercle 6, ces deux éléments 1, 6 étant alors maintenus associés par un système de liaison positif très sûr, résistant à un effort de poussée par exemple de l'ordre de plusieurs dizaines de tonnes (les galettes de déchets comprimées se comportant comme des ressorts) et cela avec un très bon coefficient de sécurité. Pour cela, d'une part, comme représenté sur les figures 2 et 3, le contour périphérique 6c de l'élément d'obturation rapporté 6 et le contour intérieur 4a de la bordure supérieure 4 de la paroi latérale 2 sont de formes générales tronconiques complémentaires. Comme représenté sur les figures 1 et 4, l'élément d'obturation rapporté 6 vient ainsi se loger et s'emmancher (ici sur toute sa hauteur) dans l'encombrement délimité par le contour intérieur 4a de la bordure supérieure 4 (délimitant pour rappel l'ouverture de remplissage 7) et vient prendre appui contre ce contour intérieur 4a. D'autre part, le contour périphérique 6c de l'élément d'obturation rapporté 6 et le contour intérieur 4a de la bordure d'extrémité supérieure 4 de la paroi latérale 2, sont pourvus d'un ensemble d'ergots saillants et de logements complémentaires s'étendant sur leurs circonférences respectives. Le nombre de couples ergot/logement est adapté en fonction notamment des efforts à retenir. Ces ergots et logements complémentaires, formant les moyens structurels de liaison proprement dit, sont aptes à s'emboîter pour le verrouillage positif et passif dudit élément d'obturation 6 emmanché sur la paroi latérale 2. Plus précisément, comme représenté sur la figure 2, le contour intérieur 4a de la bordure supérieure 4 de la paroi latérale 2 est pourvu sur sa hauteur d'un ensemble de logements annulaires 10 parallèles et successifs, ici au nombre de dix, formant ensemble une section crénelée ou un profil dit pas d'artillerie. Ces logements annulaires 10 s'étendent chacun, d'une part, sur toute la circonférence du contour intérieur 4a et d'autre part, dans un plan perpendiculaire à l'axe 2' de la paroi latérale 2. Chacun de ces logements annulaires 10 présente une section de forme générale triangulaire, ouvert en direction de l'axe 2', qui comporte une surface annulaire inclinée 10a suivie d'une surface annulaire 10b formant épaulement; ces deux surfaces 10a et 10b sont ici raccordées par une surface de jonction annulaire 10c, de section rayonnée. La surface annulaire inclinée 10a, est orientée vers le haut (c'est-à-dire vers l'extérieur du conteneur) et s'éloigne de l'axe 2' de la paroi latérale 2, du bas vers le haut (c'est-à-dire encore de l'intérieur vers l'extérieur); l'épaulement annulaire 10b est orienté vers la bordure inférieure 3 de la paroi latérale 2 (c'est-à-dire vers l'intérieur du conteneur) et s'étend dans un plan perpendiculaire à l'axe 2' de la paroi latérale 2. Deux logements annulaires 10 successifs de la bordure supérieure 4 sont séparés ici par une portion annulaire 4a1 de ce contour intérieur 4a. Ces portions annulaires 4a1 s'étendent ici chacune perpendiculairement à l'axe 2' de la paroi latérale 2. Les logements 10 et les portions annulaires 4a1 successifs présentent un décalage vers la périphérie par rapport à l'axe 2', cela du bas vers le haut sur la figure 2 (c'est-à-dire encore de l'intérieur vers l'extérieur du conteneur) ; les portions annulaires 4a1 définissent ensemble le contour intérieur 4a proprement dit de forme générale tronconique, divergeant du bas vers le haut propos des logements 10, la surface inclinée 10 s'étend selon un angle compris entre 20° et 40° par rapport à l'axe 2' de la paroi 2. La largeur de la surface d'épaulement 10b est quant à elle comprise entre 5mm et 10mm. Les portions annulaires 4al ont une hauteur comprise entre 5 mm et 10 mm. Le rayon de ces portions 4a1 augmente successivement et régulièrement du bas vers le haut; le contour intérieur 4a ainsi défini délimite un tronc de cône. Comme représenté encore sur la figure 2, extrémité supérieure libre 4a2 du contour intérieur 4a présente une forme générale annulaire tronconique, divergeant du bas vers le haut. Le logement 10 situé au niveau de l'extrémité inférieure 4a3 comporte quant à lui une surface annulaire inclinée 10a', dont la hauteur est supérieure à celle des autres logements 10 pour récupérer le diamètre intérieur de la paroi latérale 2. D'autre part, comme représenté sur la figure 3, le contour périphérique 6c de l'élément 6 d'obturation rapporté est pourvu sur sa hauteur d'une succession d'ergots annulaires 11 parallèles les uns aux autres, ici au nombre de onze, s'étendant sur toute sa circonférence et chacun dans un plan perpendiculaire à son axe 6'. Les ergots annulaires 11 forment des crans annulaires, qui sont attenants les uns aux autres sur la hauteur du contour périphérique 6c. Ils constituent ensemble un profil périphérique de forme générale tronconique dont la section présente la forme générale d'une crémaillère ou d'un profil dit pas d'artillerie. Ces ergots 11 sont complémentaires des logements 10 décrits ci-dessus en relation avec la figure 2. Ils présentent pour cela chacun une forme générale triangulaire formée d'une surface inclinée *11a,* orientée du côté de la face intérieure 6a et s'éloignant de l'axe 6' dans le sens face intérieure 6a vers la face extérieure 6b, suivie d'une surface 11b formant méplat, orientée côté face extérieure 6b et s'étendant perpendiculairement par rapport à l'axe 6' de l'élément d'obturation 6. Ces ergots 11 comportent encore chacun une arête périphérique 11c (reliant les surfaces 11a et 11b précitées), ici de forme générale annulaire et s'étendant parallèlement à l'axe 6' de l'élément d'obturation 6. Deux ergots 11 successifs sont encore reliés par une surface annulaire 11d, ici à section en arc de cercle ou rayonnée. Ces surfaces annulaires 11 forment et délimitent ensemble le contour périphérique 6c proprement dit de l'élément d'obturation 6. Les ergots 11 successifs se décalent vers la périphérie, du bas vers le haut; leurs arêtes annulaires 11c définissent alors ensemble un encombrement de forme générale tronconique, divergeant de la face intérieure 6a vers la face extérieure 6b. Ces ergots 11 ont des formes et dimensions qui correspondent, au jeu près, à celles des logements 10 décrits ci-dessus en relation avec la figure 2. La surface inclinée 11a s'étend selon un angle (le même angle que la surface inclinée 10 au jeu près) compris entre 20° et 40° par rapport à l'axe 6' de l'élément d'obturation 6 ; son méplat 11b a une largeur comprise entre 5 et 10 mm. De plus, le rayon de chaque arête 11c augmente successivement, du bas vers le haut, entre 1 et 3 mm. Comme pour les logements 10, les ergots 19 ont, dans ce genre de réalisations, des parties saillantes (les arêtes périphériques 11c, ou les contours intérieurs 4a) dont les rayons successifs en progression de 20% à 50% des largeurs des méplats 11b ou des épaulements 10b.

Ainsi, les arêtes 11c des ergots successifs 11 définissent ensemble un encombrement en forme de tronc de cône divergeant depuis sa face intérieure 6a vers sa face extérieure 6b. Par ailleurs, l'ergot 11 situé du côté de l'extrémité intérieure 6c2 du contour périphérique 6c comporte quant à lui une surface inclinée 11a' plus longue que celle des autres ergots 11, pour faciliter l'emmanchement de l'élément d'obturation 6 sur la paroi latérale 2, comme détaillé par la suite en relation avec la figure 4. De même, l'arête périphérique 11c de cet ergot 11 situé du côté de la face intérieure 6a présente un rayon qui est inférieur à celui de l'extrémité supérieure 4a2 du contour interne 4a de la paroi latérale 2, en particulier pour limiter les contacts entre les ergots 11 et le contour interne 4a de la paroi latérale 2 lors de l'opération d'emboîtement décrite par la suite. En l'occurrence, lors de l'opération d'emboîtement, les ergots 11 de l'élément d'obturation 6 sont normalement susceptibles de venir au contact d'au maximum deux à quatre portions annulaires 4a1 du contour interne 4a, avant leur positionnement dans leur logement de réception 10 final. Avant sa mise en place, ce couvercle 6 peut être traité superficiellement, par exemple par trempe, pour obtenir une dureté superficielle supérieure à celle de l'extrémité supérieure 4 de la paroi latérale 2, et ainsi éviter un grippage lors de l'opération d'emmanchement décrite ci-après.

La mise en place de l'élément d'obturation 6 au niveau de l'extrémité supérieure 4 de la paroi latérale 2 est réalisée par emmanchement ou emboîtement axial au moyen d'une presse 15, avantageusement selon les étapes de la cinématique (A, B, C) représentée sur la figure 4. La presse de montage 15 en question se compose d'une embase 16, sur laquelle le conteneur 1 vient se positionner, d'une jupe de compactage 17 pour le maintien en place de ce conteneur 1 rapporté, et d'un vérin (non représenté) dont l'extrémité de la tige 18 est pourvue de moyens 19 apte à porter l'élément d'obturation 6. Cette presse 15 est encore équipée d'un ensemble de moyens pour la manoeuvre et le pilotage du vérin (non représentés). En pratique, comme représenté figure 4A, le conteneur 1 est posé sur l'embase 16, avec son ouverture de remplissage 7 orientée vers le haut, et la jupe de compactage 17 est placée autour de la paroi latérale 2 de ce conteneur 1. Le conteneur 1 est rempli avec les déchets radioactifs, soit préalablement à son positionnement au sein de la presse 15, soit une fois en place dans cette presse. En parallèle, l'élément d'obturation 6 est monté au niveau des moyens de maintien 19 du vérin, c'est-à-dire en regard de l'ouverture 7 du conteneur 1 et coaxialement à cette dernière (toujours figure 4A).

On a représenté les déchets à comprimer et compacter. Il peut s'agir de galettes 20 résultant d'une pré-compression et d'un aplatissement de fûts métalliques dans lesquels les déchets avaient été versés en vrac. La jupe de compactage 17 a une hauteur suffisante au-dessus pour contenir le sommet du tas des galettes 20, hors de ladite paroi latérale 2. Ensuite, la tige de vérin 18 est manoeuvrée axialement en direction de l'élément de fond 5 du conteneur 1, de sorte que l'élément d'obturation 6 vienne se ranger et s'emmancher dans l'encombrement délimité par la bordure supérieure 4 du conteneur 1 (comme représenté figure 4B).

Le vérin 18 comprime en même temps le tas des galettes 20 et le fait entrer complètement dans le conteneur 1 en assurant un taux de remplissage excellent de celui-ci.

L'élément d'obturation 6 est manoeuvré jusqu'à une position finale qui est définie avantageusement par une butée mécanique correspondant à l'appui du vérin sur le haut conteneur ; en pratique, cette position finale correspond, d'une part, à l'appui entre les contours 4a et 6c de la paroi latérale 2 et de l'élément d'obturation 6, et d'autre part, à la coopération de l'ensemble des logements 10/ergots 11. La forme particulière de l'ensemble logements 10/ergots 11 contribue à optimiser ce positionnement par emmanchement du couvercle 6 sur le conteneur 1. Lors de sa manoeuvre en translation axiale, l'élément d'obturation 6 peut éventuellement être employé pour presser et compacter les produits introduits dans le conteneur 1. Dans le cadre de l'emmanchement dit « à froid » ou « à force », la bordure supérieure 4 de la paroi latérale 2 subit une déformation élastique lors du positionnement du couvercle 6 qui assure au final l'emprise des ergots 11 au sein des logements 10 de la paroi latérale 2. Dans ce cas, le frottement et grippement des ergots 11 avec la bordure supérieure 4 de la paroi latérale 2 sont limités par les surfaces inclinées 11a de ces ergots 11. Une fois l'élément d'obturation 6 convenablement emmanché (comme représenté sur la figure 4b, les moyens de maintien 19 peuvent être désolidarisés de l'élément d'obturation 6, et la jupe de compactage 17 peut être relevée, libérant ainsi le conteneur 1 fermé dans lequel les produits conditionnés sont maintenus dans un état compressé. L'élément d'obturation rapporté 6 est maintenu en place au niveau de la bordure supérieure 4 de la paroi latérale 2 par le contact des méplats 11b des ergots 11 contre les épaulements 10b des logements 10. Une variante de réalisation pour les contours en regard 4a et 6c de la paroi latérale 2 et de l'élément d'obturation 6 est représentée sur la figure 5. Ces contours 4a, 6c sont très similaires à ceux décrits ci-dessus en relation avec les figures 1 à 3, et s'en distinguent uniquement par le fait qu'ils présentent des formes générales cylindriques complémentaires (au lieu des formes tronconiques complémentaires du mode de réalisation des figures 1 à 3). Cette forme des moyens de liaison entre la paroi latérale 2 et l'élément d'obturation 6 a en particulier l'intérêt de permettre le centrage de l'élément d'obturation 6 sur le conteneur 1 dans le cas où le moyen de guidage de la presse de montage est relativement large. Pour être complet, encore de manière alternative, le contour périphérique 6c de l'élément d'obturation 6, de forme générale cylindrique ou tronconique, peut être pourvu sur sa hauteur d'un ergot de forme générale hélicoïdale, dont l'arête périphérique s'étend également dans un encombrement de forme générale cylindrique ou tronconique. Dans ce cas, cet ergot hélicoïdal coopère avec un logement complémentaire également hélicoïdal, ménagé au niveau de la bordure d'extrémité supérieure 4 de la paroi latérale 2. Ce type de couvercle 6 à ergot hélicoïdal est mis en place par translation axiale, comme décrit ci-dessus en relation avec la figure 4, de manière à exercer une force optimale de compression sur les produits stockés. Toujours dans ce cas, l'élément d'obturation 6 et la paroi latérale 2 sont avantageusement pourvus de repères pour permettre un positionnement angulaire correct entre eux, assurant ainsi le positionnement correct et complet de l'ergot hélicoïdal dans son logement de réception. De manière générale et pour tous les cas, le nombre et les dimensions des logements et ergots sont adaptés en fonction des contraintes que va subir l'élément d'obturation 6, et en particulier de l'intensité des forces de poussée exercées par les produits conditionnés. Encore de manière générale, l'élément de fond 5 pourrait présenter une structure identique ou similaire à celle décrite ci-dessus en relation avec la figure 3. La bordure inférieure 3 de la paroi latérale 2 serait alors quant à elle similaire ou identique à la bordure supérieure 4 décrite ci-dessus en relation avec la figure 2. Dans le cas d'un contenu agressif ou liquide, l'extrémité inférieure 6c2 du contour périphérique de l'élément d'obturation 6 peut encore être pourvue d'un joint élastomère torique pour assurer l'étanchéité du conteneur et pour protéger l'ensemble ergots/logements. Toujours de manière générale, l'élément d'obturation 6 peut présenter, avant son montage, une forme générale de calotte sphérique ou bombée, ce bombé étant destiné à être orienté du côté de sa face intérieure 6a. Une fois rapporté sur le conteneur 1, cet élément d'obturation 6 subit un phénomène de redressement et de déformation vers une forme plane, sous l'effort de poussée exercé par les produits conditionnés, provoquant un accroissement du diamètre de son contour périphérique 6c et optimisant la coopération ergot(s) 11/logement(s) 10.

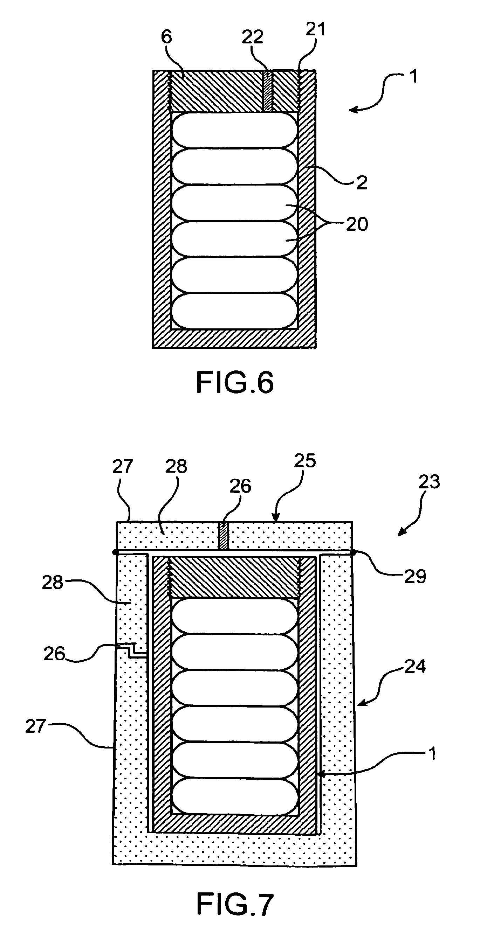

La description porte maintenant sur la figure 6. L'élément d'obturation 6 peut être soudé à la face latérale 2 par un cordon 21 à leur jonction. De plus, une pastille respirante 22, pouvant consister en une traversée en matière poreuse, équipe l'élément d'obturation 6 (ou la face latérale 2). Ces dispositions peuvent trouver emploi si le dégazage par radiolyse du conteneur 1 doit être mesuré ou examiné d'une autre manière, car il est alors concentré à l'endroit de la pastille 22 et donc facile à maîtriser

On passe à la description de la figure 7. Le conteneur 1 rempli des galettes 20 et fermé peut être disposé dans un conteneur externe 23 tel qu'un colis d'entreposage à titre temporaire ou définitif. Le conteneur externe 23 peut être à enveloppe métallique 27 et à couche de confinement radiologique en béton 28, par exemple et composé d'une partie principale 24 creuse et d'un couvercle 25. Il n'est pas clos hermétiquement mais permet au contraire l'évacuation des gaz issus des galettes 20 et ayant traversé le conteneur 1. Les gaz peuvent passer par des portions spécialement aménagées 26 équipant soit la partie principale 24 ou le couvercle 25 et consistant encore en des pastilles respirantes, des portions poreuses, ou des perçages à labyrinthe par exemple. Le conteneur 1 peut être logé dans la cavité du conteneur externe 23 avec peu de jeu puisque ses dimensions sont parfaitement connues et invariables de sorte qu'il reste peu de volume vide. Le couvercle 25 est soudé à la partie principale 24 à leur jonction 29 une fois que le conteneur 1 a été mis en place.

## Revendications

1. Conteneur en forte de fût pour la stabilisation et le confinement de déchets solides se composant d'une paroi latérale (2) ayant des bordures d'extrémité inférieure (3) et supérieure (4) chacune pourvues d'un élément d'obturation (5, 6), l'un au moins desdits deux éléments d'obturation (6) étant de type rapporté pour fermer une ouverture (7) délimitée par la bordure d'extrémité (4) associée, ledit élément d'obturation rapporté (6) comportant deux faces, l'une intérieure (6a) et l'autre extérieure (6b), reliées par un contours périphérique (6c),
lequel contour périphérique (6c) de l'élément d'obturation rapporté (6) et un contour intérieur (4a) de la bordure d'extrémité (4) associée de la paroi latérale (2) étant de formes générales complémentaires sur au moins une partie de leurs hauteurs respectives, de sorte que ledit élément d'obturation rapporté (6) vienne se loger sur au moins une partie de sa hauteur dans un espace entouré par ladite bordure d'extrémité (4) de la paroi latérale (2) et vienne s'appuyer sur ladite bordure d'extrémité (4),
**caractérisé en ce que** le contour périphérique (6c) de l'élément d'obturation rapporté (6) est pourvu d'au moins un ergot (11) saillant et s'étendant sur sa circonférence, qui présente une section de forme générale triangulaire formée d'une surface inclinée (11a), orientée vers la face intérieure (6a) avec une
inclinaison telle que ladite surface inclinée (11a) s'éloigne d'un axe (6') central dudit élément d'obturation (6) dans un sens de la face intérieure (6a) vers la face extérieure (6b) selon un angle compris entre 20° et 40° par rapport audit axe (6'), suivie d'une surface formant méplat (11b), orientée vers la face extérieure (6b),
et **en ce que** le contour intérieur (4a) de la bordure d'extrémité (4) de la paroi latérale (2) présente au moins un logement (10) s'étendant également sur sa circonférence, apte à recevoir ledit ergot (11) pour assurer un verrouillage dudit élément d'obturation (6) rapporté sur ladite paroi latérale (2), lequel logement (10) présente une section comportant une surface inclinée (10a), orientée vers l'extérieur du conteneur avec une inclinaison telle que ladite surface inclinée (10a) s'éloigne d'un axe (2') central de ladite paroi latérale (2) dans un sens intérieur vers extérieur selon un angle compris entre 20° et 40° par rapport audit axe (2'), suivie d'une surface (10b) formant épaulement, orientée vers l'intérieur du conteneur.

2. Conteneur selon la revendication 1, **caractérisé en ce que** la surface (11b) formant méplat de l'ergot saillant (11) de l'obturation rapporté (6) s'étend dans un plan perpendiculaire à l'axe (6') dudit élément d'obturation (6), et **en ce que** la surface (10b) formant épaulement du logement complémentaire (10) de la bordure d'extrémité (4) de la paroi latérale (2) s'étend dans un plan perpendiculaire à l'axe (2') de la paroi latérale (2).

3. Conteneur selon l'une quelconque des revendications 1 ou 2, **caractérisé en ce qu'**il comprend une pluralité desdits ergots (11) et une pluralité desdits logements (10), les ergots (11) et les logements (10) étant superposés en direction de l'axe (6') de l'élément d'obturation ou de l'axe (2') de la paroi latérale (2).

4. Conteneur selon la revendication 3, **caractérisé en ce que** les ergots et les logements sont tous annulaires et parallèles.

5. Conteneur selon la revendication 3, **caractérisé en ce que** les ergots (11) sont des spires successives d'un ergot hélicoïdal, et les logements (10) sont des spires successives d'un logement hélicoïdal.

6. Conteneur selon l'une quelconque des revendications 3 à 5, **caractérisé en ce que** les contours complémentaires (6c, 4a) de l'élément d'obturation rapporté (6) et de la paroi latérale (2) sont de formes générales tronconiques complémentaires sur au moins une partie de leurs hauteurs respectives, ladite partie tronconique (6c) de l'élément d'obturation divergeant dans le sens face intérieure (6a) vers face extérieure (6b) et ladite partie tronconique (4a) de la paroi latérale (2) divergeant dans le sens intérieur vers extérieur du conteneur, les ergots (11) ayant des arêtes périphériques (11c) à des rayons différentes croissants de la face intérieure vers la face extérieure, et les logements (10) sont séparés par des contours intérieurs (4a) également de rayons différents, croissants de l'intérieur vers l'extérieur du conteneur.

7. Conteneur selon la revendication 6, **caractérisé en ce que** les rayons de certains des contours intérieurs (4a) sont plus grands que les rayons de certaines des arêtes (11c) des ergots (11).

8. Conteneur selon la revendication 6 ou 7, **caractérisé en ce que** les rayons des contours intérieurs (4a) et des arêtes périphériques (11c) sont successivement croissants à raison de 20% à 50% de largeurs des méplats ou des épaulements.

9. Conteneur selon la revendication 3, **caractérisé en ce que** les ergots sont attenants les uns aux autres, les surfaces formant méplat (11b) alternant directement avec les surfaces inclinées (11a).

10. Conteneur selon l'une quelconque des revendications 1 à 9, **caractérisé en ce que** la surface inclinée de l'ergot est plus dure que la surface inclinée du logement.

11. Procédé pour la stabilisation et le confinement de produits tels que des déchets radioactifs dans un conteneur (1) selon l'une quelconque des revendications 1 à 10, **caractérisé en ce qu'**il consiste:
- à remplir le conteneur (1) par son ouverture de remplissage (7), avec lesdits produits;
- à rapporter un élément d'obturation adapté (6) en regard de ladite ouverture de remplissage
- à appliquer un effort de compression sur lesdits produits en exerçant une force sur ledit élément d'obturation rapporté (6), coaxialement à la paroi latérale (2) et en direction de son autre élément d'obturation (5), jusqu'à ce que les contours complémentaires (6c, 4a) dudit élément d'obturation rapporté (6) et de la paroi latérale (2) s'appuient l'un contre l'autre, de manière a comprimer lesdits produits et à assurer le verrouillage dudit élément d'obturation rapporté (6) sur ladite paroi latérale (2) par l'emboîtement de l'ergot dans le logement.

12. Procédé selon la revendication 11, **caractérisé en ce que**, préalablement à son positionnement, l'élément d'obturation rapporté (6) présente une forme générale de calotte sphérique, son bombé étant orienté du côté de sa face intérieure (6a), et **en ce que**, une fois rapporté, ledit élément d'obturation (6) subit un phénomène de redressement et de déformation vers une forme plane, sous l'effort de poussée exercé par les produits, provoquant un accroissement du diamètre de son contour périphérique (6c) et améliorant l'emboîtement de l'ergot dans le logement.

13. Procédé selon la revendication 11 ou 12, **caractérisé en ce qu'**il comprend une étape de soudure de l'élément d'obturation à la paroi latérale, le conteneur étant traversé par une pastille respirante (22), perméable aux gaz.

14. Procédé selon l'une quelconque des revendications 11 à 13, **caractérisé en ce qu'**il comprend une étape d'enfermement du conteneur, qui est en métal, dans un conteneur externe ayant une enveloppe de confinement radiologique.

15. Procédé selon la revendication 14, **caractérisé en ce que**, le conteneur externe comprenant une partie principale et un couvercle, et une portion de respiration, le couvercle (25) est soudé (29) à la partie principale (24).

## Claims

1. Container in the form of a drum for stabilising and confining solid waste comprising a side wall (2) with lower (3) and upper (4) end edges each provided with a blocking member (5, 6), at least one of said two blocking members (6) being of the inserted type in order to close an opening (7) defined by the associated end edge (4), said inserted blocking member (6) comprising two faces, one interior (6a) and the other exterior (6b), connected by a peripheral outline (6c),
peripheral outline (6c) of the inserted blocking member (6) and an interior outline (4a) of the associated end edge (4) of the side wall (2) having generally complementary shapes on at least one portion of their respective heights, in such a way that said inserted blocking member (6) comes to be housed on at least one portion of its height in a space surrounded by said end edge (4) of the side wall (2) and comes to bear against said end edge (4),
**characterised in that** peripheral outline (6c) of the inserted blocking member (6) is provided with at least one protruding lug (11) and extending over its circumference, which has a section of generally triangular shape formed of an inclined surface (11a), directed towards the interior face (6a) with an inclination such that said inclined surface (11a) moves away from a central axis (6') of said blocking member (6) in a direction from the interior face (6a) to the exterior face (6b) according to an angle between 20° and 40° in relation to said axis (6'), followed by a surface forming a flat (11b), directed towards the exterior face (6b),
and **in that** the interior outline (4a) of the end edge (4) of the side wall (2) has at least one recess (10) extending also over its circumference, able to receive said lug (11) in order to ensure a locking of said inserted blocking member (6) on said side wall (2), recess (10) having a section comprising an inclined surface (10a), directed towards the exterior of the container with an inclination such that said inclined surface (10a) moves away from a central axis (2') of said side wall (2) in an interior towards the exterior direction according to an angle between 20° and 40° in relation to said axis (2'), followed by a surface (10b) forming a shoulder, directed towards the interior of the container.

2. Container according to claim 1, **characterised in that** the surface (11b) forming a flat of the protruding lug (11) of the inserted blocking member (6) extends in a plane perpendicular to the axis (6') of said blocking member (6), and **in that** the surface (10b) forming a shoulder of the complementary recess (10) of the end edge (4) of the side wall (2) extends in a plane perpendicular to the axis (2') of the side wall (2).

3. Container according to any of claims 1 or 2, **characterised in that** it comprises a plurality of said lugs (11) and a plurality of said recesses (10), the lugs (11) and the recesses (10) being superimposed in the direction of the axis (6') of the blocking member or of the axis (2') of the side wall (2).

4. Container according to claim 3, **characterised in that** the lugs and the recesses are all annular and parallel.

5. Container according to claim 3, **characterised in that** the lugs (11) are successive spires of a helicoidal lug, and the recesses (10) are successive spires of a helicoidal recess.

6. Container according to any of claims 3 to 5, **characterised in that** the complementary outlines (6c, 4a) of the inserted blocking member (6) and of the side wall (2) have generally complementary tapered shapes over at least one portion of their respective heights, said tapered portion (6c) of the blocking member diverging in the direction from the interior face (6a) to the exterior face (6b) and said tapered portion (4a) of the side wall (2) diverging in the direction from the interior to the exterior of the container, the lugs (11) having peripheral ridges (11c) with different increasing radiuses from the interior face to the exterior face, and the recesses (10) are separated by interior outlines (4a) also of different radiuses, increasing from the exterior of the container.

7. Container according to claim 6, **characterised in that** the radiuses of some of the interior outlines (4a) are larger than the radiuses of some of the ridges (11c) of the lugs (11).

8. Container according to claim 6 or 7, **characterised in that** the radiuses of the interior outlines (4a) and of the peripheral ridges (11c) are successively increasing at a rate of 20% to 50% of the widths of the flats or of the shoulders.

9. Container according to claim 3, **characterised in that** the lugs are adjoining in relation to one another, the surfaces forming a flat (11b) alternating directly with the inclined surfaces (11a).

10. Container according to any of claims 1 to 9, **characterised in that** the inclined surface of the lug is harder than the inclined surface of the recess.

11. Method for stabilising and confining products such as radioactive waste in a container (1) according to any of claims 1 to 10, **characterised in that** it consists:
- in filling the container (1) via its filling opening (7), with said products;
- in inserting an adapted blocking member (6) across from said filling opening (7),
- in applying a compression force on said products by exerting a force on said inserted blocking member (6), coaxially to the side wall (2) and in the direction of its other blocking member (5), until the complementary outlines (6c, 4a) of said inserted blocking member (6) and of the side wall (2) bear against one another, in such a way as to compress said products and to ensure the locking of said inserted blocking member (6) on said side wall (2) by the nesting of the lug in the recess.

12. Method according to claim 11, **characterised in that**, prior to its positioning, the inserted blocking member (6) has a general shape of a cup, its dome being directed towards the side of its interior face (6a), and **in that**, once inserted, said blocking member (6) undergoes a straightening and deformation phenomenon towards a flat shape, under the thrust force exerted by the products, causing an increase in the diameter of its peripheral outline (6c) and improving the nesting of the lug in the recess.

13. Method according to claim 11 or 12, **characterised in that** it comprises a step of welding the blocking member to the side wall, the container being crossed by a breathing pellet (22), gas-permeable.

14. Method according to any of claims 11 to 13, **characterised in that** it comprises a step of enclosing of the container, which is made of metal, in an external container having a radiological confinement shell.

15. Method according to claim 14, **characterised in that**, the external container comprising a main portion and a lid, and a respiration portion, the lid (25) is welded (29) to the main portion (24).

## Patentansprüche

1. Fassförmiger Behälter für die Stabilisierung und die Umhüllung von festen Abfällen, umfassend eine Seitenwand (2) mit einem unteren (3) und einem oberen (4) Endrand, die jeweils mit einem Verschlusselement (5, 6) versehen sind, wobei wenigstens eins der beiden Verschlusselemente (6) vom angebauten Typ ist, um eine Öffnung (7) zu verschließen, die durch den zugeordneten Endrand (4) begrenzt wird, wobei das angebaute Verschlusselement (6) zwei Seiten umfasst, deren eine (6a) innen und deren andere (6b) außen ist, welche durch eine Umfangskontur (6c) verbunden sind,
wobei die Umfangskontur (6c) des angebauten Verschlusselements (6) sowie eine Innenkontur (4a) des zugeordneten Endrands (4) der Seitenwand (2) wenigstens über einen Teil ihrer jeweiligen Höhen im Allgemeinen komplementäre Formen aufweisen, derart, dass sich das angebaute Verschlusselement (6) wenigstens über einen Teil seiner Höhe in einem Raum befindet, der durch den Endrand (4) der Seitenwand (2) umgeben ist und in Anlage an den Endrand (4) gelangt,
**dadurch gekennzeichnet, dass** die Umfangskontur (6c) des angebauten Verschlusselements (6) mit wenigstens einer vorstehenden Nase (11) versehen ist, die sich über seinen Umfang erstreckt und die einen im Allgemeinen dreieckigen Querschnitt aufweist, gebildet durch eine geneigte Oberfläche (11a), die zur Innenseite (6a) hin mit einer derartigen Neigung orientiert ist, dass die geneigte Oberfläche (11a) sich von einer zentralen Achse (6') des Verschlusselements (6) in einer Richtung von der Innenseite (6a) zur Außenseite (6b) unter einem Winkel entfernt, der zwischen 20° und 40° bezüglich der Achse (6') enthalten ist, gefolgt von einer zur Außenseite (6b) hin orientierten Oberfläche (11b), die eine Abflachung bildet,
und dass die Innenkontur (4a) des Endrands (4) der Seitenwand (2) wenigstens eine Aussparung (10) aufweist, die sich ebenfalls über ihren Umfang erstreckt und dazu ausgelegt ist, die Nase (11) aufzunehmen, um eine Verriegelung des angebauten Verschlusselements (6) an der Seitenwand (2) zu gewährleisten, wobei die Aussparung (10) einen Querschnitt mit einer geneigten Oberfläche (10a) aufweist, die zur Außenseite des Behälters hin mit einer derartigen Neigung orientiert ist, dass die geneigte Oberfläche (10a) sich von einer zentralen Achse (2') der Seitenwand (2) in einer Richtung von innen nach außen unter einem Winkel entfernt, der zwischen 20° und 40° bezüglich der Achse (2') enthalten ist, gefolgt von einer zur Innenseite des Behälters hin orientierten Oberfläche (10b), die eine Schulter bildet.

2. Behälter nach Anspruch 1, **dadurch gekennzeichnet, dass** sich die Oberfläche (11b), die die Abflachung der vorstehenden Nase (11) des angebauten Verschlusses (6) bildet, in einer Ebene orthogonal zur Achse (6') des Verschlusselements (6) erstreckt, und dass die Oberfläche (10b), die die Schulter der komplementären Aussparung (10) des Endrands (4) der Seitenwand (2) bildet, sich in einer Ebene orthogonal zur Achse (2') der Seitenwand (2) erstreckt.

3. Behälter nach einem der Ansprüche 1 oder 2, **dadurch gekennzeichnet, dass** er eine Mehrzahl der Nasen (11) und eine Mehrzahl der Aussparungen (10) umfasst, wobei die Nasen (11) und die Aussparungen (10) in Richtung der Achse (6') des Verschlusselements oder der Achse (2') der Seitenwand (2) überlagert sind.

4. Behälter nach Anspruch 3, **dadurch gekennzeichnet, dass** die Nasen und die Aussparungen alle ringförmig und parallel sind.

5. Behälter nach Anspruch 3, **dadurch gekennzeichnet, dass** die Nasen (11) aufeinanderfolgende Windungen einer Schraubennase sind, und dass die Aussparungen (10) aufeinanderfolgende Windungen einer Schraubenaussparung sind.

6. Behälter nach einem der Ansprüche 3 bis 5, **dadurch gekennzeichnet, dass** die komplementären Konturen (6c, 4a) des angebauten Verschlusselements (6) und der Seitenwand (2) wenigstens über einen Teil ihrer jeweiligen Höhen im Allgemeinen komplementäre Kegelformen haben, wobei der kegelförmige Teil (6c) des Verschlusselements in der Richtung von der Innenseite (6a) zur Außenseite (6b) hin divergiert, und wobei der kegelförmige Teil (4a) der Seitenwand (2) in der Richtung von der Innenseite zur Außenseite des Behältern hin divergiert, wobei die Nasen (11) Umfangsgrate (11c) mit verschiedenen Radien haben, welche von der Innenseite zur Außenseite hin zunehmen, und wobei die Aussparungen (10) durch Innenkonturen (4a) mit ebenfalls verschiedenen Radien separiert sind, die von der Innenseite zur Außenseite des Behälters hin zunehmen.

7. Behälter nach Anspruch 6, **dadurch gekennzeichnet, dass** die Radien einiger der Innenkonturen (4a) größer sind als die Radien einiger der Grate (11c) der Nasen (11).

8. Behälter nach Anspruch 6 oder 7, **dadurch gekennzeichnet, dass** die Radien der Innenkonturen (4a) und der Umfangsgrate (11c) im Verhältnis von 20% bis 50% der Breiten der Abflachungen oder der Schultern sukzessive zunehmen.

9. Behälter nach Anspruch 3, **dadurch gekennzeichnet, dass** die Nasen aneinander angrenzen, wobei die Oberflächen (11 b), die eine Abflachung bilden, direkt mit den geneigten Oberflächen (11a) alternieren,

10. Behälter nach einem der Ansprüche 1 bis 9, **dadurch gekennzeichnet, dass** die geneigte Oberfläche der Nase härter ist als die geneigte Oberfläche der Aussparung.

11. Verfahren zur Stabilisierung und zur Umhüllung von Produkten wie z. B. radioaktiven Abfällen in einem Behälter (1) nach einem der Ansprüche 1 bis 10, **dadurch gekennzeichnet, dass** es umfasst:
- Füllen des Behälters (1) mit den Produkten durch seine Füllöffnung (7) hindurch;
- Anbauen eines hinsichtüch der Füllöffnung (7) geeigneten Verschlusselements (6),
- Aufbringen eines Kompressionsdrucks auf die Produkte durch Ausüben einer Kraft auf das angebaute Verschlusselement (6) koaxial zur Seitenwand (2) und in Richtung des anderen Verschlusselements (5), bis die komplementären Konturen (6c, 4a) des angebauten Verschlusselements (6) und der Seitenwand (2) gegeneinander drücken, derart, dass die Produkte komprimiert werden und die Verriegelung des angebauten Verschlusselements (6) an der Seitenwand (2) durch den Eingriff der Nase in die Aussparung sichergestellt wird.

12. Verfahren nach Anspruch 11, **dadurch gekennzeichnet, dass** das angebaute Verschlusselement (6) vor seiner Positionierung eine allgemeine Kugelkalottenform aufweist, wobei seine Wölbung auf der Seite seiner Innenseite (6a) orientiert ist, und dass das Verschlusselement (6), nachdem es angebaut ist, unter dem durch die Produkte ausgeübten Druck ein Umbildungs- und Verformungsphänomen hin zu einer flachen Form verfährt, das eine Zunahme des Durchmessers seiner Umfangskontur (6c) bewirkt und den Eingriff der Nase in der Aussparung verbessert.

13. Verfahren nach Anspruch 11 oder 12, **dadurch gekennzeichnet, dass** es einen Schritt des Verschweißens des Verschlusselements an der Seitenwand umfasst, wobei der Behälter von einer gasdurchlässigen Atmungspastüle (22) durchsetzt wird.

14. Verfahren nach einem der Ansprüche 11 bis 13, **dadurch gekennzeichnet, dass** es einen Schritt des Einschließens des Behälters, der aus Metall ist, in einem externen Behälter umfasst, der einen radiologischen Umhüllungsmantel aufweist.

15. Verfahren nach Anspruch 14, **dadurch gekennzeichnet, dass** der externe Behälter einen Hauptteil und einen Deckel sowie einen Atmungsteil umfasst, wobei der Deckel (25) an den Hauptteil (24) geschweißt ist (29).
